# EUROPEAN PATENT SPECIFICATION

(11) **EP 4 216 705 B1**
(45) Date of publication and mention of the grant of the patent: **22.05.2024**
(21) Application number: 21790533.0
(22) Date of filing: 23.09.2021
(51) Int. Cl.: A01D 45/00, A01D 46/30

(54) **HARVESTER**
ERNTEMASCHINE
MOISSONNEUSE

(30) Priority: 24.09.2020 GB 202015134
(43) Date of publication of application: 02.08.2023
(73) Proprietor: MUDDY MACHINES LTD, London, W4 5PY (GB)
(72) Inventor: CHAVASSE, Christopher Bernard, London, W4 5PY (GB)
(74) Representative: Barnes IP Limited
(86) International application number: PCT/GB2021/052475
(87) International publication number: WO 2022/064199

(56) References cited:
- EP-A1- 3 484 267
- EP-B1- 3 484 267
- CN-A- 102 577 755
- DE-A1-102009 011 368
- DE-U1-202011 005 366
- US-A1- 2005 016 152
- Erdbeerspargelportal: "selektiver Spargelernter bei der Ernte", , 23 May 2019 (2019-05-23), XP055873194, Retrieved from the Internet: URL:https://www.youtube.com/watch?v=NTo8l- N73_Y

## Description

### Field

The present invention relates to harvesting of crops, in particular, automated and selective harvesting of crops.

### Background

High value crops such as asparagus, Tenderstem (RTM) broccoli, courgettes, artichokes, broccoli, and cauliflower are typically harvested by hand to allow selective picking of mature crops from the plants while leaving immature or unripe crops for later harvesting when they have ripened. However, it is increasingly difficult for farmers to recruit enough labourers to harvest high-value field vegetables, resulting in increases in labour costs, waste of crops and resources. Thus, harvesting machines are becoming increasingly necessary.

There are issues with using harvesting machines. Individual crops may grow at very different rates and not ripen at the same time. Therefore, precise removal of only the mature/fully-grown crop is required. Furthermore, even with row crops, the individual crops are non-uniformly positioned, in clusters and also singularly, and spaced apart at random. For example, asparagus spears grow at different rates and in various configurations (e.g. multiple spears at the same location, some mature, some immature). This means that a harvesting machine needs to be able to cut the mature crop without damaging the surrounding ones. Existing automated harvesting machines do not provide these precise harvesting requirements resulting in waste of immature crop and incomplete harvests.

Thus, there is a growing urgency to increase the use, capability, and accuracy of harvesting machines. The present invention seeks to do this by providing a harvester that can selectively harvest crops.

CN102577755A discloses a strawberry picking robot and a ridge-culture strawberry picking robot. The picking actuating mechanism of the strawberry picking robot comprises a mixed coordinate type motion device, a mechanical claw device connected with the mixed coordinate type motion device, and a supporting and connecting device used for fixing the mixed coordinate type motion device.

### Summary of invention

According to aspects and/or embodiments, there is provided apparatus for harvesting a crop comprising a gantry and a cutter unit, the gantry being configured to moveably support the cutter unit (movable relative to the gantry) wherein the gantry is configured to allow the cutter unit to move so that the cutter unit is capable of approaching and cutting individual crops passing underneath the gantry from any direction.

According to a first aspect, there is provided a harvester according to claim 1.

By providing a gantry which allows a cutter unit to move so that the cutter unit is capable of approaching and cutting an individual crop from any direction, aspects and/or embodiments can allow the cutter unit to approach and cut the individual crop from a direction which does not damage the surrounding crops and/or the direction of approaching and cutting can be selected so as to avoid damaging the surrounding crops.

The term "gantry" will be understood to refer to any suitable frame or support apparatus that is able to pass over the crops as the harvester moves, and which is operable to support various components of the harvester (in particular the cutter unit and actuators for moving the cutter units relative to the gantry). Other terms that could be used to refer to the gantry can include: support; support frame; and/or frame.

Optionally, the cutter unit (52) is operable to approach and cut an individual crop (12) from any direction relative to the individual crop (12) in a horizontal plane relative to the individual crop (12).

By being able to approach a crop to be harvested from any direction in a horizontal plane (for example the horizontal plane parallel with the ground in which the crop is planted) the crop can be harvested from one or more of the more optimal angles (e.g. that avoids the cutter unit touching or potentially damaging other crops that are not currently being harvested).

Optionally, the cutter unit (52) is positioned at an oblique angle relative to the ground.

By configuring the cutter unit at an oblique angle relative to the ground, the cutter unit can cut each crop being harvested at or slightly below the ground level to maximise the amount of harvested crop.

Optionally, the cutter unit may be rotatable in one or more axes relative to the gantry. By rotating the cutter unit relative to the gantry, the cutter can be accurately positioned to cut the crop from the most suitable side. For example, the cutter unit may be rotatable about an axis which is substantially parallel to a vertical axis and/or about a horizontal axis. The horizontal axis may be substantially parallel to the side-to-side direction of the harvester or substantially parallel to the forwards-backwards direction of the harvester. This can help compensate for a crop that is angled to the vertical direction or when the ground is inclined.

Optionally, the harvester may further comprise a gripper configured to grip the crop.

By providing a holding means or gripper which can hold or grip the crop during cutting, the crop can be prevented from falling to the ground and/or can be more easily collected/placed into a storage container once harvested. Optionally, the harvester is configured to actuate the holding means or gripper to hold or grip the crop during and/or after cutting. Optionally, the harvester is configured to move the holding means or gripper and the held or gripped crop after cutting. In this way, the crop can be collected after cutting and transported to a storage area.

The cutter unit and the gripper may be mounted on a harvesting tool connected to the gantry.

The cutter unit may comprise any of: a blade, or other suitable cutting means or cutting element such as a wire; or a scissor-like cutting mechanism.

The harvesting tool may comprise an actuator for moving the cutter unit in a vertical direction relative to the ground. The harvester may further comprise a ground sensor configured to sense the distance between the cutter unit and the ground and/or sense contact with the ground. Thus, crops can be cut at a position on their stalk/stem/spear close to the ground, or on contact with the ground, minimising waste and preventing damage to surrounding immature crops and/or the harvesting apparatus.

The harvester may be configured to control the movement, optionally the vertical movement, of the cutter unit based on the sensed distance between the cutter unit and the ground. Optionally, the harvester is configured to control the actuator for moving the cutter unit in a vertical direction based on the sensed position of the cutter unit relative to the ground. Optionally, the harvester is configured to move the cutter unit in a vertical direction based on the sensed position of the cutter unit relative to the ground.

The cutter unit may be positioned at an oblique angle to the harvesting tool. This allows the cutting element to penetrate into the ground, cutting as much of the crop off as possible. In some embodiments, the blade is positioned parallel to the ground.

The harvester may further comprise a housing for the cutter unit.

In an embodiment, the harvester having the cutter unit and a blade may further comprise a cutting actuator, which may be configured to actuate the cutting element between a first and a second position, wherein in the first position the cutting element is retracted into the housing, and in the second position the cutting element is exposed. Therefore, the cutting element is retracted when the cutter unit is not actively cutting a crop. As such, the cutter unit can be weaved among crops without risk of damage to immature crops from the cutting element.

The harvester may comprise a sensing means that is configured to detect the number of individual crops and/or the relative position of individual crops. Optionally, the harvester is configured to control the gantry and preferably the rotation of the cutter unit so that the cutter unit cuts the individual crop from a direction which does not damage the other individual crop or crops, based on the detected number of individual crops and/or relative position of the individual crops. In this way, the harvester may control the movement and rotation of the cutter unit. For example, the harvester or an external processing means may judge, based on the detected relative position of the individual crops, whether approaching and cutting the individual crop from the direction corresponding to the current position of the cutter unit would damage the other individual crop or crops. If it is judged that damage would occur, the harvester may move the cutter unit to a position corresponding to a direction from which the cutter unit can approach and cut the individual crop without damaging the other individual crop or crops. The harvester or an external processing means may calculate the direction of approach necessary to avoid damaging the other individual crop or crops and may move the cutter unit to a corresponding position. The corresponding position may be a position from which the cutter unit can approach the individual crop without damaging the other individual crop or crops or may be a position where the cutter unit will be able to approach in that way once the harvester has moved forward.

The sensing means may be one or more sensors or cameras/image sensors. Optionally, these sensors/cameras can be provided on the gantry rather than on the cutter unit(s) or harvester tool(s), which can allow one sensor or set of sensors to provide sensor information for use by one or a plurality of cutter units and can provide sensor data on the location of the harvester tool(s) and/or cutter unit(s) as well as the crop(s) (12) and/or the relative positions of the one or more crops to each other and/or to the harvester tool(s) and/or cutter unit(s).

During cutting, the harvester may be configured to move the cutter unit backwards with respect to the gantry to compensate for the forward motion of the harvester. Optionally, during cutting, the harvester is configured to move the cutter unit backwards with respect to the gantry so that the cutter unit does not move in the forwards-backwards direction with respect to the ground. This configuration allows the harvester to continue moving forwards while harvesting is carried out, increasing efficiency of the process.

Optionally, a guide surface is provided which can guide a stem/spear of the individual crop into the cutting path of the cutter unit.

The harvester may be configured to harvest any or any combination of: asparagus; tenderstem broccoli; crops having an integral stem wherein the stem is operable to be gripped.

In an embodiment there is provided a harvesting system. Optionally, the harvester comprises a plurality of wheels. The harvesting system may comprise one or more harvesters and a locomotive element, wherein the locomotive element is configured to pull the one or more harvesters along the ground. Alternatively, the one or more harvesters may have its own propulsion system.

The harvesting system may further comprise an object detection and avoidance system configured to guide the locomotive element along a row of crops, thereby can prevent the locomotive element from crushing crops as it moves.

The gantry may extend from one side of the harvester to the other. The gantry may extend from the front of the harvester to the rear of the harvester. The cutting unit may be movable or slidable along the gantry. The gantry may have an actuator or actuators for moving the cutting unit in the horizontal and/or vertical direction. The actuator or actuators may be for moving the cutting unit in the side-to-side direction and/or the forwards-backwards direction of the harvester. The gantry may be configured to allow the cutter unit to move vertically linearly and/or vertically in a swinging motion.

I Further described herein is a harvester for harvesting a crop, comprising a gantry and a cutter unit. The gantry may be configured to movably support the cutter unit. The cutter unit is configured to cut the individual crop. The harvester may further comprise a ground sensor configured to sense the distance between the cutter unit and the ground, wherein the harvester is configured to control the vertical movement of the cutter unit relative to the ground based on the sensed distance between the cutter unit and the ground.

The optional features of the first aspect of the invention are equally applicable to the second aspect of the invention.

Optionally, the ground sensor (34) comprises a sensor substantially operable to determine contact between the cutter unit (52) and the ground.

By determining contact with the ground, further vertical movement towards the ground can be prevented in order to prevent damage to the harvester apparatus.

Further described herein is a harvesting tool (22) for a harvester (1), comprising: a blade (32) operable to cut at an oblique angle relative to the ground; a gripper (28) operable to grip a crop (12); wherein the gripper (28) grips the crop (12) at a first position on the crop (12) and the blade (32) cuts the crop (12) at a second position on the crop (12) where the second position is substantially at ground level.

Providing a combined gripper and cutter can allow more efficient harvesting of crops by a harvesting apparatus.

Optionally, a rotating actuator (26) is provided that is operable to rotate the gripper (28) and cutting blade (32).

Providing a rotation mechanism allows for the gripper and cutter to be positioned relative to the crop to be harvested to allow more optimal harvesting and can also allow the harvesting tool to avoid damage to other crops not being harvested.

Optionally, the blade (32) and the gripper (28) are set apart on the harvesting tool (22) by a predetermined distance.

Providing the gripper separate from the blade allows the blade to be used closer to the ground and thus for more of the crop to be harvested which can result in an increased crop yield.

Optionally, there is further provided a ground sensor, the ground sensor operable to determine either a distance between the harvesting tool and the ground or contact between the harvesting tool and the ground.

By determining the distance to the ground or contact with the ground, excess vertical movement towards/into the ground can be prevented in order to prevent damage to the harvester apparatus.

### Brief Description of Drawings

Embodiments will now be described, by way of example only and with reference to the accompanying drawings having like-reference numerals, in which:
Figure 1 is an elevation view of a harvesting system according to a simplified representation of an embodiment;
Figure 2 is a plan view of a harvesting system according to an embodiment;
Figure 3 is an isometric view of the harvesting system of Figure 2;
Figure 4 is an elevation view of part of an existing harvesting system;
Figure 5 is a schematic isometric view of part of the harvesting system of Figure 2 showing the directions of actuation and rotation;
Figure 6 is a schematic isometric view of a gantry actuation mechanism of the harvesting system of Figure 2;
Figure 7 is an isometric view of a gripper and cutting unit of the harvesting system of Figure 2;
Figure 8 is an isometric view of the gripper and cutting unit of Figure 7;
Figure 9 is an isometric view of the harvesting system of Figure 2 in use;
Figure 10 is a block diagram displaying the control hardware elements of the harvesting system of Figure 2;
Figure 11 is a simple flowchart depicting the process of harvesting according to the embodiment;
Figure 12 shows an alternative embodiment of the harvesting member and harvesting tool; and
Figure 13 shows more detail of the ground sensor of the harvesting tool of Figure 12.

### Specific Description

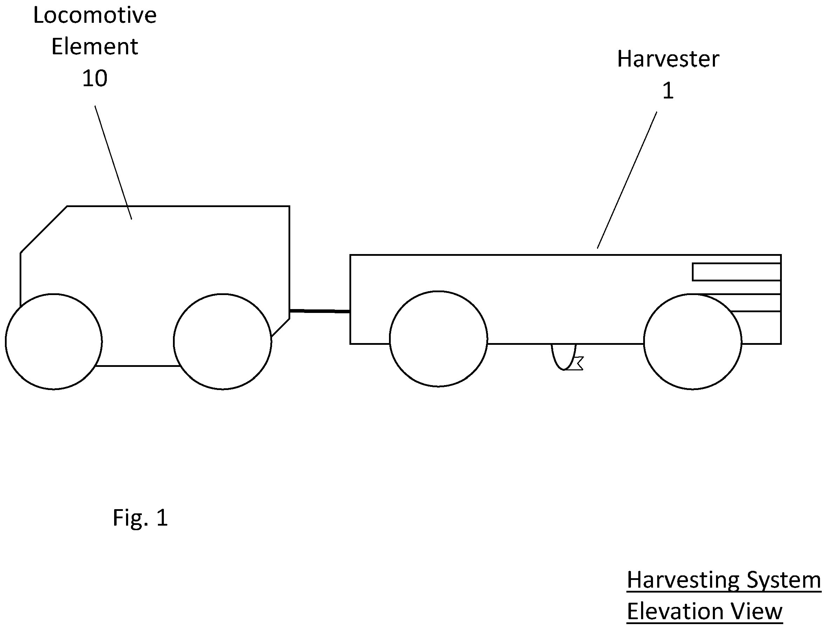

Figure 1 is a simplified view showing a harvesting system comprising a locomotive element 10 and a harvester 1 according to an embodiment.

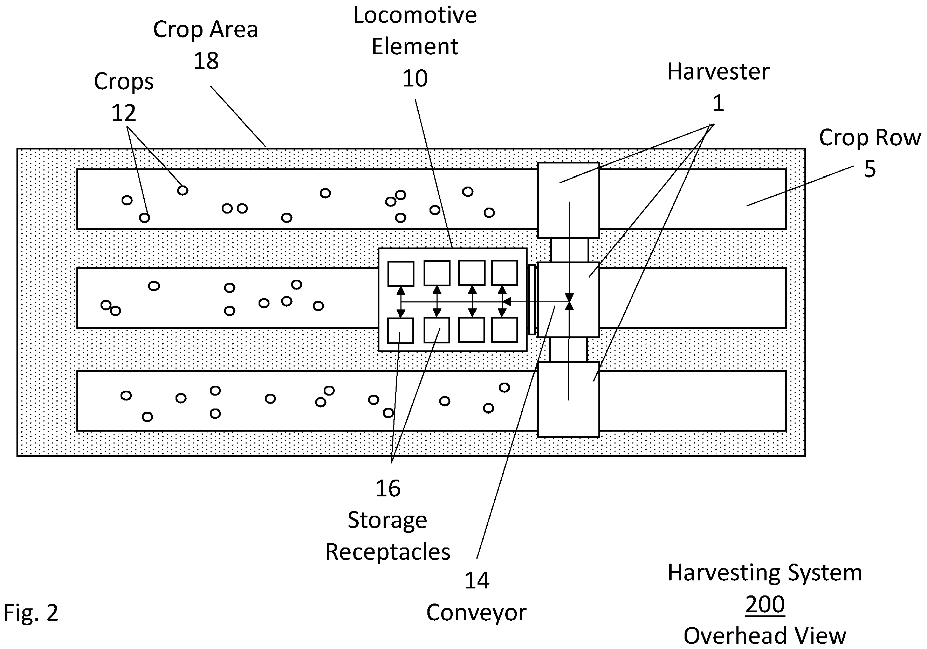

Figure 2 shows an overhead view of a harvesting system 200 comprising a locomotive element 10 and a harvester 1 according to an embodiment, which will now be described in more detail. In this embodiment, the locomotive element 10 and harvester 1 further comprise a conveyor 14 that is operable to transport harvested crops 12 from the harvester 1 into the storage receptacles 16 in the locomotive element 10.

The locomotive element 10 pulls the harvester 1 over a crop area 18, the crop area having multiple rows 5 of crops 12. The locomotive element 10 and harvester 1 move along the crop rows 5 to allow the harvester to harvest the crops 12 in each crop row as the locomotive element 10 and harvester 1 move along the crop rows 5. In some embodiments, the locomotive element 10 and harvester 1 move along the crop rows 5 at a constant speed while in other embodiments locomotive element 10 and harvester 1 move along the crop rows 5 at variable speeds (for example, depending on the density of crops 12 at different portions of the crop rows 5). In another embodiment, locomotive element 10 and harvester 1 move along the crop rows 5 at either a constant speed or variable speeds but stops and starts to enable the harvester to harvest the crops 12 when the harvester reaches a sufficiently dense area of crops 12 at one or more points in a crop row 12.

In this embodiment, the locomotive element 10 is a tractor, preferably an electric tractor. It will be understood that any suitable vehicle is intended. In this embodiment, the locomotive element 10 comprises an electric drive train and power source. In other embodiments, different combinations of drive propulsion and power sources can be used. In this embodiment, the locomotive element 10 can be detached from the harvester 1.

The locomotive element 10 comprises a localisation and object detection and avoidance system. This directs the locomotive element 10 and ensures that, in use, it does not crush crops 12 as it moves across the crop area 18. In other embodiments, any suitable localisation and object detection and avoidance method and/or system can be used. In some embodiments, no localisation is used. In some embodiments no object detection and avoidance system is used.

The locomotive element 10 comprises at least one storage receptacle 16. Each storage receptacle 16 is suitable for receiving and storing the harvested crops 12. Although the storage receptacle 16 is shown on the locomotive element, it will be understood that it could alternatively be a separate component or form part of the harvester 1 (as in the first embodiment), or a combination.

In this embodiment, the locomotive element 10 pulls the harvester 1 over rows 5 containing crops 12. In other embodiments, multiple locomotive elements and/or harvesters can be paired with each other. In other embodiments, an integrated locomotive element and harvester can be provided.

In this embodiment, the locomotive element 10 pulls the harvester 1 comprising three harvesting elements, allowing the harvester to operate along three crop rows 5 substantially simultaneously. As the harvester 1 moves over the crops 12, the crops 12 are harvested by the harvester 1 and transported via the conveyor 14 to storage receptacles 16. The harvester 1, in other embodiments, may comprise one or a plurality of harvesting elements, each harvesting element able to harvest an area, and in embodiments each harvesting element able to harvest along a crop row 5.

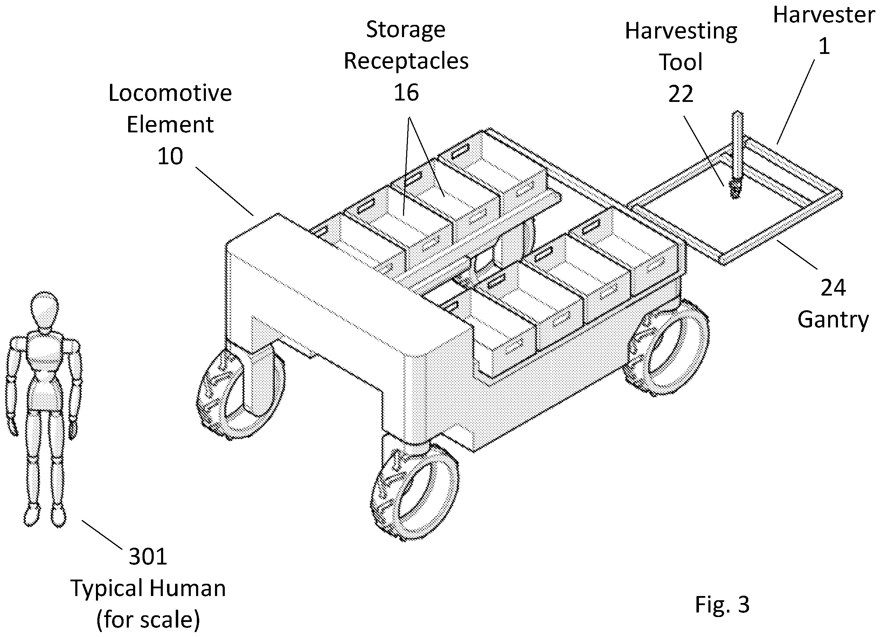

Figure 3 shows a more detailed representation of the locomotive element 1 and harvester 1 alongside a typical human figure (for scale) 301, which will now be described in more detail below.

The locomotive element 10 is shown having a plurality of storage receptacles 16 for collecting harvested crops. In this embodiment, no conveyer is shown and crops when harvested can be manually collected having been harvested by the harvester 1 and placed into the storage receptacles 16. In other embodiments, the harvested crops can be automatically transported from the harvester 1 into the storage receptacles 16, for example using a conveyor or a robot arm.

The harvester 1 is shown having a gantry 24 on which the harvesting tool 22 is mounted, and the gantry 24 allows the harvesting tool 22 to move relative to the gantry 24, allowing the harvesting tool 22 to move more flexibly relative to the movement of the harvester 1 as it moves along a crop area to be harvested.

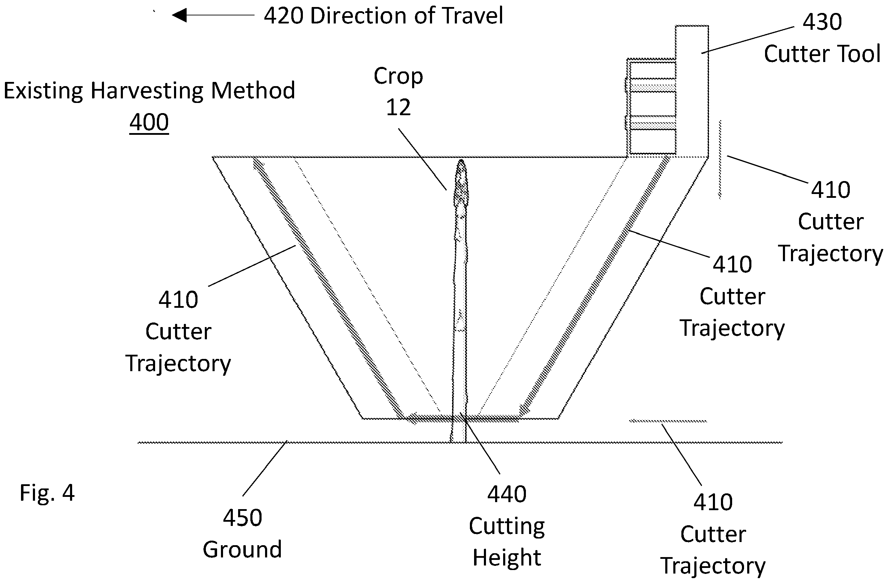

Figure 4 shows an existing harvesting method 400, which will now be described in more detail below.

As shown, the harvesting method 400 can only cut the crop 12 in the direction of travel of the machine 420. The trajectory of the cutting tool 430 is shown by the arrows 410. Therefore, such methods cannot take into account crops that grow at different rates. For example, the existing harvesting method 400 in the example shown is utilised to harvest asparagus spears as the crop 12. Asparagus spears that are ready for harvest are often located proximate to, or touching, immature spears. Cutting in a single direction, as shown 410, severely damages surrounding spears, reducing the yield and creating waste. Furthermore, such systems 400 are only capable of cutting at a single height 440 above ground level 450. This results in a reduction in the weight of the harvested crop, a reduced shelf-life, a reduction in the overall yield of the crop and leaving stumps of crop (for example green asparagus) above ground results in hormonal retardation of new spear initiation and growth.

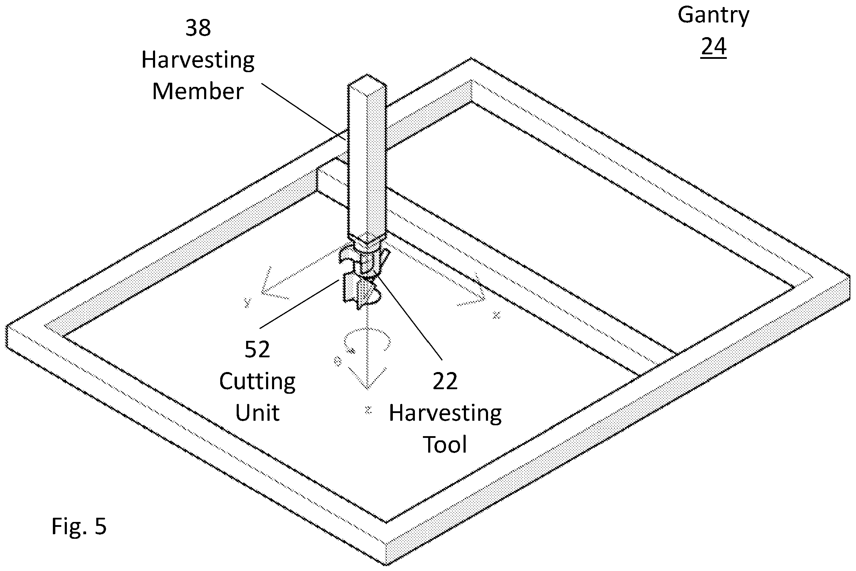

As depicted in Figure. 5, the harvester 1 according to an embodiment comprises a gantry 24 and a harvesting tool 22 which address these problems, and which will now be described in further detail below.

The harvesting tool 22 is movable or actuatable along three mutually perpendicular directions or axes XYZ. The harvesting tool 22 is also rotatable about the vertical (Z) axis.

In the present embodiment, the harvesting tool 22 comprises a cutting unit 52, and the gantry 24 is configured to moveably support the cutter unit 52 so that the cutter unit 52 is capable of cutting the crop from any direction in the horizontal plane.

In the present embodiment, the cutter unit 52 hangs below the gantry 24 and is supported by a harvesting member 38. In other embodiments, the cutter unit 52 is supported relative to the gantry 24 by other suitable mechanisms to enable movement relative to the gantry 24, for example by an articulated arm.

In the present embodiment, the harvester 1 is configured to pass over the crops during harvesting by moving across the planted crop area or along rows of planted crops.

The gantry 24 provides support for an actuation mechanism that enables precise positioning of the harvesting tool 22.

In an embodiment, the gantry 24 also provides a frame supporting a conveyor system 14 configured to transport the harvested crop to a storage receptacle 16.

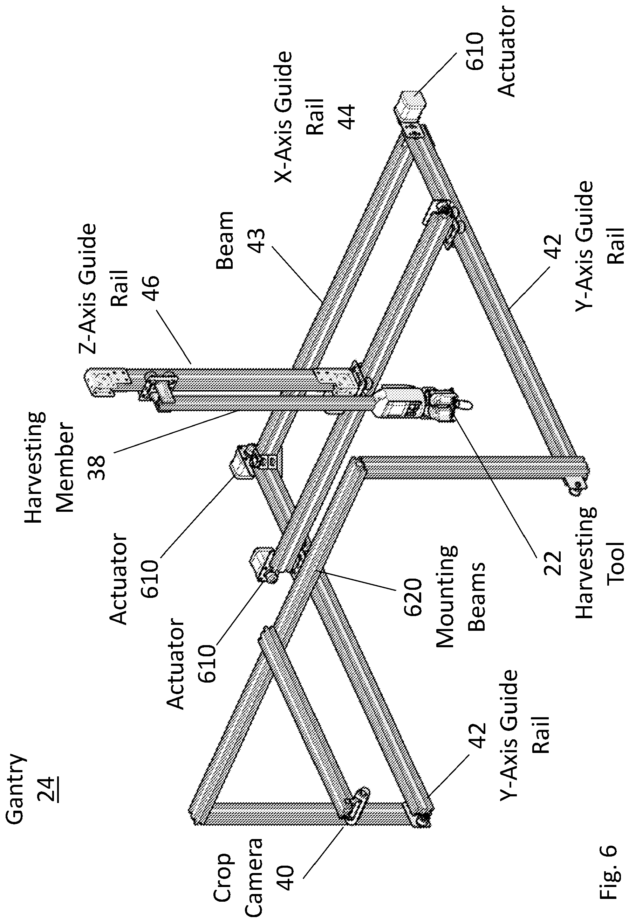

As will be described in more detail below, Figure 6 shows an alternative embodiment of the gantry 24 having a pair of members 42, hereafter referred to as Y-axis guide rails 42 positioned parallel to each other.

Two Y-axis guide rails 42 are spaced apart, substantially parallel to each other, and each connected at substantially one end to a beam 43 such that the Y-axis guide rails 42 are connected via the beam 43. A third member, an X-axis guide rail 44, extends between the pair of Y-axis guide rails 42, positioned perpendicular to both and in substantially the same plane. Each end of the X-axis guide rail 44 is slidably connected to one of the Y-axis guide rails 42 such that the X-axis guide rail 44 is movable on a linear path in the Y direction along the length of the Y-axis guide rails 42. Also shown are various actuators 610 in the form of electric motors for moving one guide rail 44, 46 relative to another 42, 44.

A further member is provided slidably connected to the X-axis guide rail 44. The further member is a Z-axis guide rail 46, movable on a linear path on the X-axis along the length of the X-axis guide rail 44. A harvesting member 38 is provided and on the harvesting member 38 is provided a harvesting tool 22. The harvesting member 38 is slidably connected to the Z-axis guide rail 46. Being slidably connected to the Z-axis guide rail 46 while the Z-axis guide rail 46 and the X-axis guide rail 44 are both allowed to move relative to each other in the Y-axis and X-axis means that the harvesting member 38 can be actuated linearly in three degrees of freedom via the Y-axis guide rail 42, X-axis guide rail 44 and the Z-axis guide rail 46. In use, the X-axis guide rail 44 and the Y-axis guide rail 42 allow the harvesting tool 22 to be positioned at the correct position over the crop bed. The Z-axis guide rail 46 moves the harvesting tool 22 from above the crop towards ground level and vice versa.

In an alternative arrangement, instead of (or in addition to) being provided slidably connected to the Z-axis guide rail 46, the harvesting member 38 is rotatable relative to the Z-axis guide rail 46. In this way, the harvesting member 38 can be pivoted at the junction between the harvesting member 38 and the Z-axis guide rail 46 such that it is rotated away from and towards the ground in a swinging movement.

As shown in Figure 6, the gantry 24 includes a sensing means which is in the form of a crop camera 40 in the present embodiment. The crop camera 40 is mounted to the Y-axis guide rails 42 via mounting beams 620.

In the described embodiments, the Y-axis is the direction of movement of the locomotive element 10 and harvester 1. Actuation of the harvesting member 38, and thus the tool 22, in the Y direction allows the gantry 24 to compensate for the forward motion (i.e. the movement in the direction of movement) of the locomotive element 10 and harvester 1. The gantry 24 can, as a result, move the harvesting tool 22 backwards relative to the forward movement of the harvester 1, thus the harvesting tool 22 can be maintained in a fixed position relative to the ground while harvesting the crop 12. Further, the harvesting tool 22 can be moved forwards and sideways in the same plane and relative to the direction of forward movement to position the harvesting tool 22 as required.

The degree of movement in the X, Y and Z directions provided by the gantry 24 means the harvesting tool 22 can be adjusted to approach the crop from a substantially optimal direction. The harvesting tool 22 can be weaved between the crop/spears as the harvester 1 moves forward.

The actuation of the actuators 610 is achieved using by known actuation means, for example electromechanical/pneumatic/hydraulic actuators in embodiments, incorporated onto the guide rails 42, 44, 46. It will be understood that in other embodiments, other known suitable actuation means are also intended. The degree of actuation in the XYZ direction is based in the described embodiment on the output of the crop camera 40 but in other embodiments one or more sensors may be provided in the same and/or other positions on the gantry 24 harvester 1 or locomotive element 10, where these one or more sensors provide sensor data that can be used to position one or more harvesting tools 22. In the described embodiment, the crop camera 40 identifies crops and detects the position of the crops. A processor (not shown) uses the data from the camera 40 to determine the position of the crop and plans a path to move the cutting unit 52 to a position substantially over the position of the crop without damaging other crops and to approach the crop to be harvested at the substantially optimum gripping and cutting angle (the "harvesting position"). The actuators 610 are engaged to move the guide rails 44, 46 to the correct XYZ coordinates such that the harvesting member 38 is moved to the XYZ position determined to be the harvesting position (which it should be noted will change dynamically due to any forward motion of the harvester 1).

As part of determining the harvesting position, the processor determines whether approaching and cutting the individual crop from the direction corresponding to the current position/orientation of the cutter unit 52 would damage any other individual crop or crops. If the processor determines that damage would occur (or determines that the probability of damage exceeds a predetermined threshold), the processor instructs the actuators 610 to move guide rails 44, 46 and therefore the cutter unit 52 to a position and/or orientation corresponding to a direction from which the cutter unit 52 can approach and cut the individual crop to be harvested without substantially damaging any other individual crop or crops.

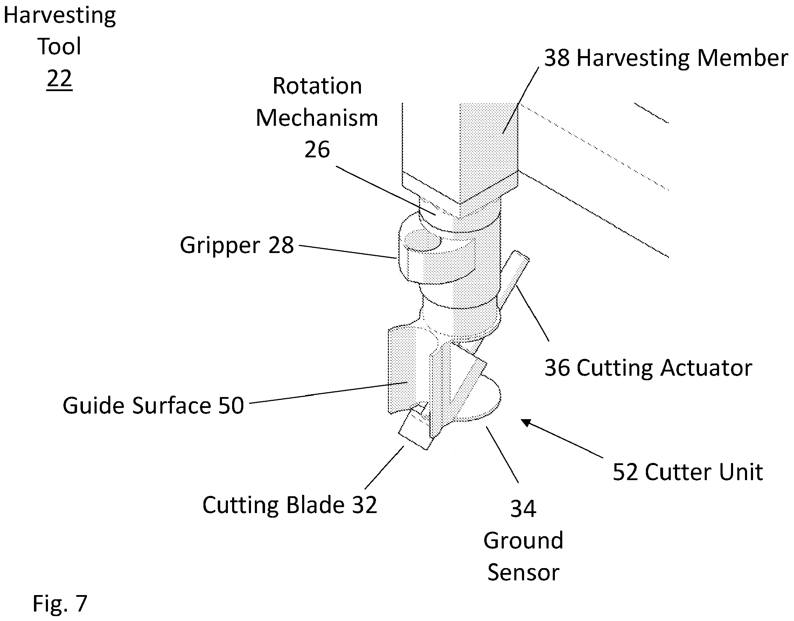

Referring now to Figure 7, there will be described in more detail the harvesting tool 22 of the embodiment shown in Figure 6.

The harvesting tool 22 is mounted at the bottom end of the harvesting member 38. The harvesting tool 22 is formed having a rotation mechanism 26 mounted on the harvesting member 38, to enable rotation of the tool 22 relative to the harvesting member 38 and therefore relative to the gantry 24. A gripper 28 is mounted to the rotation mechanism 26 and a guide surface 50 and cutter unit 52 are mounted to the gripper 28.

The harvesting member 38 comprises a rigid member that extends from the gantry 24. A portion of the harvesting member 38 is connected to the gantry. A lower end of the harvesting member 38 comprises the harvesting tool 22. The harvesting tool 22, as shown in Fig. 7, is configured to engage with a crop. In an embodiment, the harvesting member 38 is orientated vertically relative to the ground.

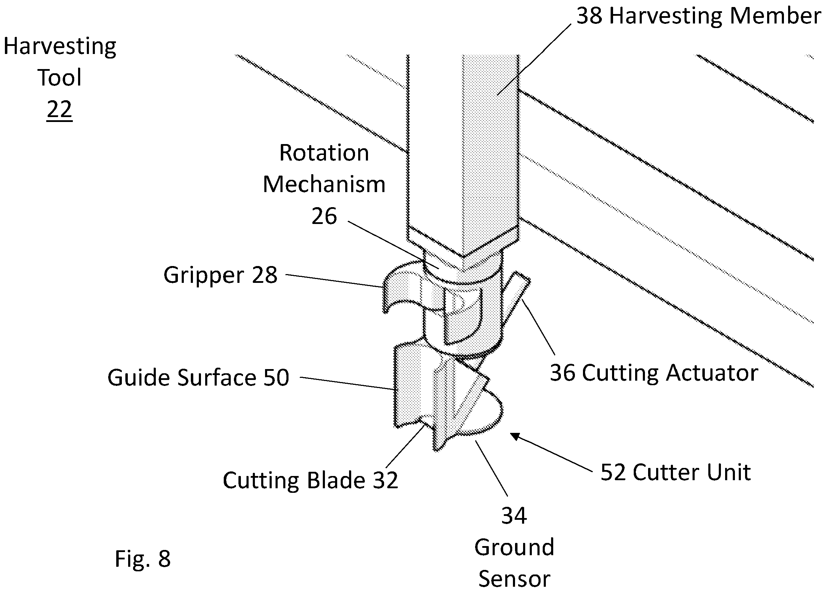

The harvesting tool 22 comprises a gripper 28 and the cutting unit 52 having a cutting blade 32. The gripper 28 extends radially from a central axis of the harvesting member 38. The gripper 28 can be configured in an open position, as will be described in more detail below in respect of Figure 8, wherein it is suitable for receiving an individual crop. The gripper 28 can also be configured in a closed position, as shown in Figure 7, wherein it surrounds and can securely hold a crop that has been placed within range of the gripper 28 while the gripper 28 is open. The gripper 28 is adjustable between the open and closed positions. Although one gripper 28 is shown in this embodiment, it will be understood that in other embodiments there may be a plurality of grippers.

Cutting blade 32 is positioned at an end of the harvesting tool 22. As shown in Figure 7 the cutting blade 32 is positioned at an oblique angle to the harvesting tool 22, and thus also to the ground in use. An oblique angle as described herein is an angle other than 0° or 90°, i.e. not perpendicular or parallel. It will be appreciated that, although the cutting blade 32 shown is positioned at an oblique angle, in some embodiments the cutting blade 32 is positioned parallel or perpendicular to the ground or a horizontal plane, i.e. perpendicular or parallel to the harvesting tool 22, respectively. Having the cutting blade 32 at an oblique angle can be advantageous for some crops, for example asparagus, where cutting much of the crop off as possible is desired as the angle of the blade allows cutting to occur close to or below ground level, or close to the crop roots. Other crops, for example broccoli, cauliflower and lettuce, can be cut with the cutting blade 32 parallel to the ground.

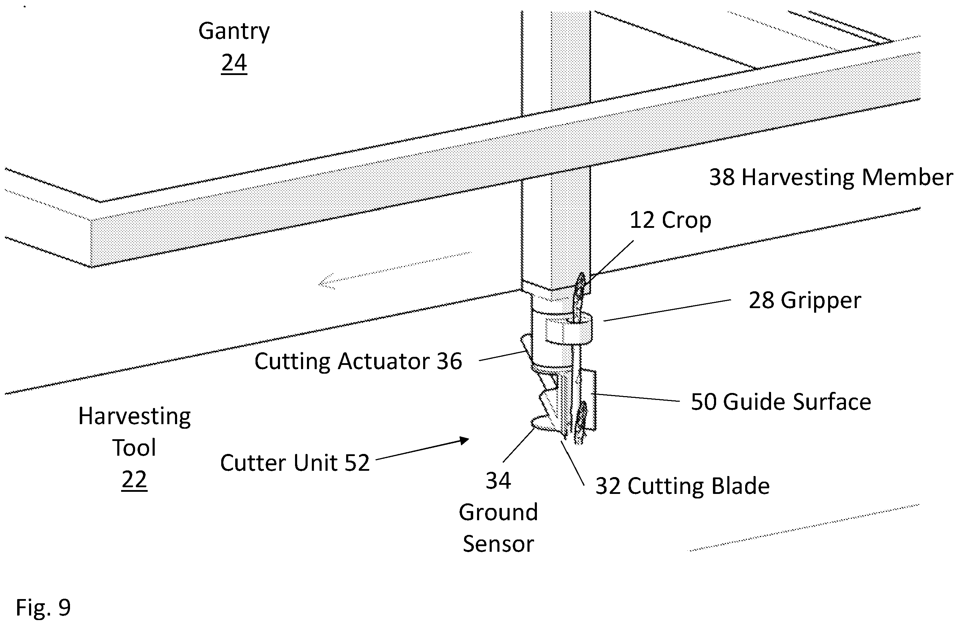

The harvesting tool 22 further comprises a cutter actuator 36 configured to actuate the cutting blade 32 between two positions. In a first position, the cutting blade 32 is retracted and housed within the cutter unit 52. In a second position, the cutting blade 32 is fully extended and exposed. The cutting path of the cutting blade 32 is the path of the cutting blade 32 between its retracted and extended positions. As shown in Figure 9, which is described in more detail below, in use a crop (e.g. asparagus) is secured by the gripper 28 such that the stem/spear is positioned in the cutting path of the cutting blade 32. When the cutting actuator 36 actuates the cutting blade 32 between the first and second positions it slices through the crop 12 in the process. In some embodiments, a guide surface 50 of the cutter unit 52 further guides the stem/spear of the crop into the path of the cutting blade 32.

The harvesting member 38 has a central axis. The harvesting tool 22 is rotatable relative to the central axis of the harvesting member 38. The harvesting member 38 comprises a rotation mechanism 26, which allows the harvesting tool 22 to be rotated about the central axis of the harvesting member 28. Thus, the harvesting tool 22 can be rotated depending on the position of the crops, as sensed by the crop camera 40. As shown in Figure 9, which is described in more detail below, for example the cutting unit 52 faces approximately 90° to the direction of travel of the harvester 1, which is designated by the arrow. In this way, the crop can be cut from any direction and angle. This allows the harvesting tool to avoid immature crops and selectively grip and cut the mature crop from the most suitable angle, not just from the direction of travel of the harvester 1.

The harvesting tool 22 is also movable along the Z direction with respect to the Z-axis guide rail 46. This actuation is integrated with a ground sensor 34 to detect the ground level. The harvesting tool 22 is moved downward in a Z direction by an actuator and the ground sensor 34 detects the ground level and triggers the cutting actuators to instigate cutting. Thus the secondary Z-axis movement and the ground sensor allow harvesting to take place as close to the ground as possible on the crop stalk/spear. The ground sensor 34, shown in Figure 7 is configured to determine the height of the harvesting tool 22 relative to the ground as the harvester 1 is carried over the crops. The ground sensor 34 determines adjustment information for an adjustment of the vertical position of the harvesting tool 22 with respect to the ground based at least in part on the distance measured relative to the ground.

Referring now to Figures 8 and 9, there will now be described in more detail the operation of the harvesting tool 22 according to an embodiment.

Prior to harvesting crops, the gripper 28 is actuated into an open position. The harvesting member 38 is manoeuvred into the harvesting position such that the cutter unit 52 is positioned substantially optimally in order to cut and grip the crop 12 to be harvested. The crop 12 to be harvested is then positioned against the guide surface 50 and gripped by the gripper 28 by actuating the gripper 28 into a closed position around the crop, using the ground sensor 34 and the camera 40 to position the cutting blade 32 in respect of the crop to be harvested and the soil. Then, the cutter unit 52 extends the cutting blade 32 using the cutting actuator 36 to cut the base of the crop to be harvested while the crop 12 to be harvested is held by the gripper 28. The harvesting member 38 can then be manoeuvred in order to position the harvesting tool 22 a above a storage container or conveyer belt and, once in position, the gripper 28 can be actuated to release the harvested crop 12 into the storage container or on to the conveyor belt.

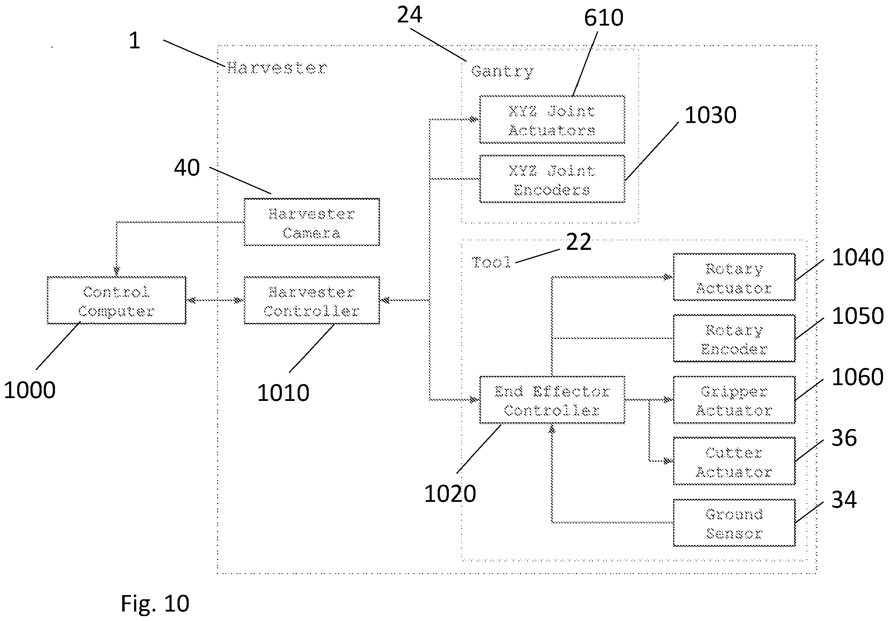

Figure 10 is a block diagram displaying the control hardware elements of the harvesting system of the embodiment of Figure 2 according to an embodiment.

The control computer 1000 can receive sensor data from any sensors on board the locomotive element 10 and/or harvester 1, and in this embodiment receives image data from the harvester camera 40. The "harvester camera" is crop camera 40. In other embodiments, other sensor data is received instead of or as well as the image data and used to make determinations about the crops and/or crop area.

The computer 1000 uses the image data to make determinations about crops and the crop area. In particular, the computer 1000 detects crops in the image data and identifies crops for harvesting in the image data. The computer 1000 also makes a determination about which crops to harvest and in which order.

For each crop that is determined by the computer 1000 to be queued to be harvested by the harvester 1, instructions are generated by the computer 1000 and sent to the harvester controller 1010 which is in communication with the computer 1000. In other embodiments, there may be multiple controllers 1010. In some embodiments there are multiple control computers 1000 provided which can work independently or in parallel, or in some embodiments part of the processing (e.g. cloud computing services and/or distributed computing devices) and/or sensor data can be performed remotely (e.g. independent sensing platforms such as CCTV systems, aerial drones, terrestrial robots or vehicles with sensors provided).

Once the harvester controller 1010 has received instructions for the next crop to harvest, in in turn creates instructions for the XYZ joint actuators 610 and the end effector controller 1020. The harvester controller 1010 is in communication with the XYZ joint actuators 610, the XYZ encoders 1030 and the end effector controller 1020, so the harvester controller 1010 sends the generated instructions to the XYZ joint actuators 610 and the end effector controller 1020 and receives information back on the position of the actuators 610 on their respective guide rails 42, 44, 46 in order to regenerate or update any instructions.

The XYZ joint actuators move along their respective guide rails 42, 44, 46 to position the cutting tool 22 in a position allowing it to harvest the crop identified for harvest by the control computer 1000.

The end effector controller 1020 then instructs the rotary actuator 1040 to rotate the cutting unit 52 to the correct orientation to allow the gripper 28 to grip the crop 12 and the cutting blade 32 to cut the crop 12. The rotary encoder 1050 provides feedback on the rotation position of the rotary actuator 1040 to the end effector controller 1020. The gripper actuator 1060 is controlled by the end effector controller 1020 to cause the gripper 28 grip the crop 12 to be cut. The cutter actuator is then controlled by the end effector controller 1020 to cut the crop 12 once it has been held by the gripper 28. In parallel, the ground sensor 34 provides information to the end effector controller 1020 to ensure that the cutter in position correctly and which can be provided back to the harvester controller 1010 to control the XYZ joint actuators to position the tool 22 correctly on the gantry 24.

Once the crop 12 has been harvested, the XYZ actuators 610 can be controlled by the harvester controller 1010 to move the crop 12 into position over, for example, a container 12 into which it is to be dropped and the end effector controller 1020 used to control the gripper actuator 1060 to release the crop 12 from the gripper 28 to allow the crop 12 to fall into the container 12.

In the present embodiment, the control computer 1000 (or processor described above) is located in the locomotive element 10, but alternatively it may be located in the harvester 1 itself.

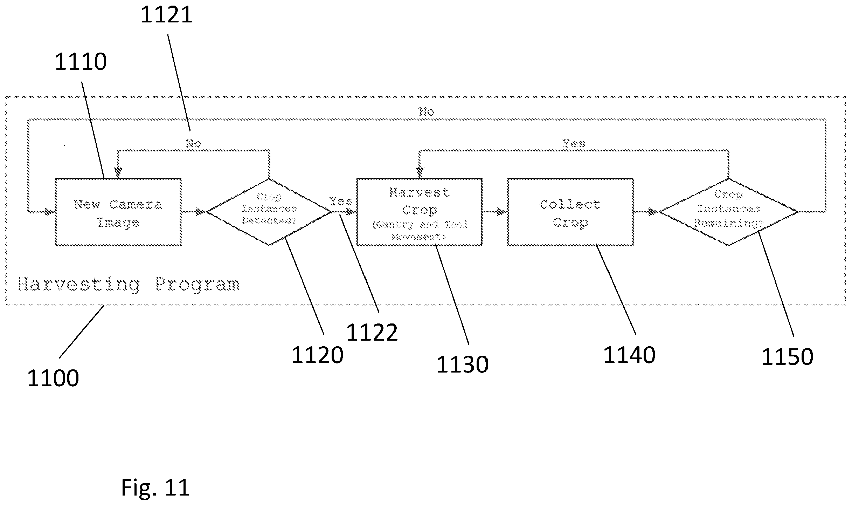

According to an embodiment there is provided a method of operation (or harvesting program) 1100 of the harvesting system as shown in Figure 11 which will now be described in more detail.

During operation of the harvester 1, the crop camera 40 captures an image of a crop 1110 and provides it to the computer 1000 which detects crop instances in each image 1120. If no crop instance is detected 1121, the computer 1000 waits to receive the next image data for processing. If one or more crop instance is detected 1122 then the programme for harvesting the crop 1130 is executed. Upon execution of the programme 1130, the actuation mechanism of the gantry 24 moves the harvesting member 38 to the correct XY coordinates for the detected crop. Once in the correct XY position, the harvesting tool 22 is moved in the Z direction by the gantry 24 until the harvesting tool 22 is a predetermined distance above ground level (as determined by the ground sensor 34 in the tool 22). The predetermined distance above ground level depends on the crop being harvested and the evenness of the ground and surrounding terrain. For example, for asparagus, the harvesting tool 22 is moved from approximately 300mm above ground to approximately 20mm above ground level. This range of distances is advantageous for harvesting asparagus spears as, when not harvesting, the harvesting tool 22 can travel above the tops of the asparagus, preventing damage. For other crops, e.g. artichokes or Tenderstem (RTM) broccoli, the harvesting tool 22 will have a higher initial position of approximately 600 - 700mm above the ground. The harvesting tool 32 is moved down to 500-300mm above ground, since such crops grow much higher off the ground.

If necessary, the harvesting tool 22 is then rotated by the rotation mechanism 26 relative to the harvesting member 38, such that the cutting unit 52 approaches the crop from the optimal side. The gripper 28, in an open configuration, receives the crop 12. The gripping tool 28 then closes, gripping the crop 12.

For crops where cutting at or below the ground level is desired, an actuator of the harvesting tool 22 initiates a further movement of the harvesting tool 22 in the Z direction, towards the ground. The ground sensor 34 detects its position relative to the ground detects contact with, or a predetermined proximity, to the ground. The ground sensor 34 senses contact with/proximity to the ground using a suitable sensing means, for example using a switch or sensing of pressure or force. Once the ground is detected, the secondary Z-actuation is stopped and the cutting blade 32 is triggered by the cutting actuator 36, cutting the crop's stalk/stem.

Once the crop has been collected, the collect crop programme 1140 is executed to store the harvested crop in a storage receptacle 16.

Upon execution of this programme 1140, the harvesting tool 22 is then moved vertically, in the Z direction upwards and away from the ground. The harvesting tool 22 is repositioned over a conveyor and the gripper 28 is opened to release the harvested crop onto to the conveyor 14. The conveyor 14 transports the harvested crop to a storage receptacle 16.

Once the harvested crop has been put into the storage receptacle 16, a further programme executes, the crop instances remaining 1150 programme, which determines whether any further crop instances remain from the image data 1110 that have yet to be harvested. If there are any crops remaining to be harvested, then the programmes for harvesting the crop 1130 and collecting the crop 1140 are executed again as described above for each further crop instance in the image 1110 until no crop instances remain unharvested. Once all crop instances have been harvested, the process returns to waiting to receive and process the next camera image 1110.

In the described embodiments, as the harvester 1 is compensating for the forward movement of the locomotive element 10, it can communicate with the locomotive element 10. For example, where a particular area of a field is densely populated with crop 12 ready for harvest, and the harvester 1 cannot complete the harvest at the current forward speed, the harvester 1 can request that the locomotive element 10 slows down (or stops) to complete the harvest task successfully. In other embodiments, the harvester 1 cannot be requested to slow down or stop and instead some crops will remain unharvested. In some embodiments, the crop instances will be prioritised such that the most mature crops are harvested before less mature crops so that, if the harvester is unable to harvest all crop instances in the time available due to the forward movement of the locomotive element 10, the unharvested crops will be the least mature.

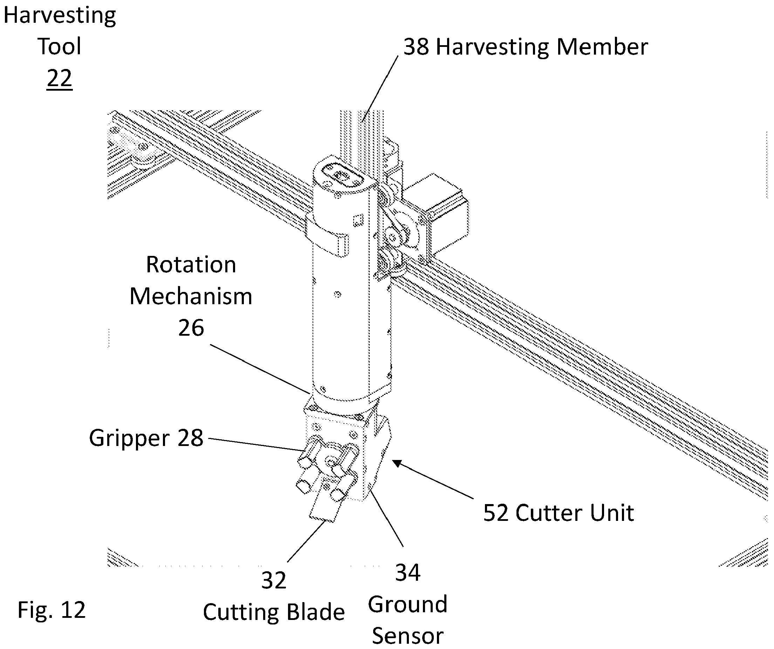

Referring now to Figure 12, an alternative harvesting member 38 and harvesting tool 22 are shown and will now be described in more detail.

The harvesting tool 22 is mounted on the bottom end of the harvesting member 38 as in other embodiments. The rotation mechanism 26 is operable to rotate the cutter unit 52 relative to the axis of the harvesting member 38 as in other embodiments. The gripper 28 has a different design, having four compliant arms to grip the crop 12.

In the cutter unit 52, to decouple end effector mass from cutting force and cutting range, a grounded (non-moving) actuator is used which is attached to the cutting blade 32 with a bowden cable. In this embodiment, the end effector is spring-loaded, with springs located in the end effector, such that when actuated the cutting blade employs a near-constant cutting force throughout the cutting action. This can also have the advantage of allowing the storing of energy and therefore the use of a smaller actuator.

In alternative embodiments, an antagonistic or dual cable design is used to permit the springs to be located with the motor or springs are not used in order to allow a programmable force profile.

In further alternative embodiments, instead of a cutting blade and actuator a scissor or secateur-style cutting mechanism is used.

In embodiments, gripping the crop can be performed using compliant devices such as foam fingers or soft robotics with inflatable silicone/rubber balloons/bladders to grip the crop.

The ground sensor 34 is located on the underneath of the cutter unit 52 and will be described further below.

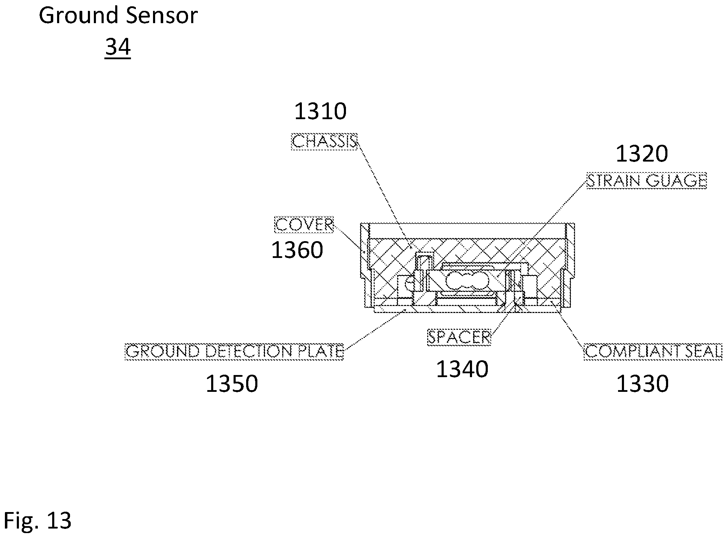

Referring now to Figure 13, there is shown in more detail the ground sensor 34 of the embodiment shown in Figure 12, and this will now be described in more detail.

The ground sensor 34 comprises a chassis 1310 having a cover 1360, in which there is a provided a strain gauge 1320. A spacer 1340 and compliant seal 1330 are provided between the chassis 1310 and strain gauge 1320 and the ground detection plate 1350.

In operation, the ground detection plate 1350 will contact the ground when the harvesting tool 22 is lowered by the harvesting member 38 to harvest a crop 12. The ground detection plate 1350 will be subject to pressure upon contact with the ground, which in turn will increase the pressure on the strain gauge and trigger a signal to be output from the ground sensor 34.

In an alternative to the described ground sensor embodiment, multiple strain gauges (and/or one or more switches and/or one or more light-based sensors) can be provided to detect not only ground impact but optionally also other collisions in other degrees of freedom (for example asparagus spears or other obstacles). In other embodiments, a probe protruding from the sensor connected to a microswitch can be used, having a rubber membrane around the probe to prevent moisture ingress. In an alternative embodiment, a z-axis motor in torque control mode can be used, having low friction and low gear reduction, allowing measurement of motor angle feedback and the stiffness of any contacted surface to determine ground contact. In a further alternative embodiment, a rubber membrane balloon can be provided at the base of the end effector which can be used to detect an increase in air pressure within the balloon due to ground contact, and thus determine ground contact. In some embodiments, providing a spring in series with the actuator in the vertical axis can provide a compliant actuator and allow fast movement of the cutting tools even if the frequency of sensor readings for the ground sensor is limited, thus mitigating damage to the apparatus due to slow sensor readings and unintended ground impact.

In embodiments for harvesting asparagus as the crop 12, the width of the blade and the length of the cutting stroke can be used depending on the thickness of the asparagus spears to be harvested. Thicker spears will require a wider cutting blade and a longer cutting stroke. The length of the cutting stroke, in some embodiments, can be determined dynamically based on the estimated width of the asparagus spear to be harvested from the image data captures of the crop instance of each asparagus spear. The width of the blade can be adjusted by exchanging different width blades in the apparatus. In some embodiments, a wider blade with a rounded tip is used. In some embodiments, multiple cutting tools are employed and therefore one cutting tool can have a thinner blade and one cutting tool a wider blade, and again the thickness of each asparagus crop to be harvested can be determined from the image data of each asparagus crop and the appropriate of the thinner or wider cutting blade tools can be used for each asparagus crop to be harvested.

In some embodiments, the blade is spring-loaded and, every time the springs are fully energised then released, the blade travels the same fixed distance (the cutting depth). In some embodiments, a controllable cutting depth can be used for each stroke of the cutting blade.

In other embodiments, a spring-loaded blade is attached to a cable that winds onto a drum, and the drum is provided on the same shaft as a rachet and pawl mechanism that allows the drum to retract the blade by winding the cable on to the drum. To release the blade, the pawl is disengaged from the ratchet.

The present invention has been described above purely by way of example. Modifications in detail may be made to the present invention within the scope of the claims as appended hereto. Furthermore, it will be understood that the invention is in no way to be limited to the combination of features shown in the examples described herein. Features disclosed in relation to one example can be combined with features disclosed in relation to a further example.

Any system feature as described herein may also be provided as a method feature, and vice versa. As used herein, means plus function features may be expressed alternatively in terms of their corresponding structure.

It should also be appreciated that particular combinations of the various features described and defined in any aspects can be implemented and/or supplied and/or used independently.

## Claims

1. A harvester (1) for harvesting a crop (12), comprising a gantry (24) and a cutter unit (52),
the gantry (24) operable to be positioned substantially over the crop (12);
the gantry (24) being configured to moveably support the cutter unit (52),
**characterised in that** the gantry (24) comprises a plurality of actuators (610) to move the cutter unit (52) along three mutually perpendicular axes relative to the gantry (24) to allow the cutter unit (52) to move so that the cutter unit (52) is operable to approach and cut an individual crop (12) from any direction relative to the individual crop (12).

2. The harvester (1) of claim 1 wherein said any direction relative to the individual crop (12) comprises any direction in a horizontal plane relative to the individual crop (12).

3. The harvester (1) of any preceding claim wherein the cutter unit (52) is positioned at an oblique angle relative to the ground and/or wherein the cutter unit (52) is rotatable in one or more axis relative to the gantry (24) and/or the crop (12).

4. The harvester (1) of any preceding claim wherein the cutter unit (52) comprises a cutting element (32); optionally wherein the cutting element (32) comprises any or any combination of: a blade; a wire; scissors; a scissor-like cutting mechanism.

5. The harvester (1) of any preceding claim, further comprising a gripper (28) configured to grip the crop (12).

6. The harvester (1) of claim 5 wherein the cutter unit (52) and the gripper (28) are mounted on a harvesting tool (22) connected to the gantry (24), and optionally wherein the harvesting tool (22) comprises an actuator (610) for moving the cutter unit (52) in a vertical direction relative to the ground.

7. The harvester (1) of claims 6, wherein the cutter unit (52) is positioned at an oblique angle to the harvesting tool (22).

8. The harvester (1) of any preceding claim wherein the harvester (1) further comprises a ground sensor (34) configured to sense the distance between the cutter unit (52) and the ground, and optionally wherein the harvester (1) is configured to control the movement of the cutter unit (52) based on the sensed distance between the cutter unit (52) and the ground.

9. The harvester (1) of any preceding claim, wherein the harvester (1) further comprises a ground sensor (34) configured to sense contact between the cutter unit (52) and the ground.

10. The harvester (1) of any preceding claim wherein the cutter unit (52) comprises a housing, and optionally wherein the cutter unit (52) further comprises a cutting actuator (36) which is configured to actuate the cutter unit (52) between a first and a second position, wherein in the first position a cutting element (32) is retracted into the housing and in the second position the cutting element (32) is exposed.

11. The harvester (1) of any preceding claim wherein the harvester (1) further comprises a sensing means (40) that is configured to detect the relative position of individual crops (12), and optionally wherein the sensing means (40) comprises one or more image sensors, and preferably wherein the sensing means (40) is provided on the gantry (24).

12. The harvester (1) of claim 11 wherein, based on the detected relative position of individual crops (12), the harvester (1) is configured to control the actuators (610) so that the cutter unit (52) cuts the individual crop (12) from a direction which does not damage other individual crops.

13. The harvester (1) of any preceding claim, wherein, during cutting, the harvester (1) is configured to move the cutter unit (52) backwards with respect to the forward motion of the harvester (1) to compensate for the forward motion of the harvester (1).

14. The harvester (1) of any preceding claim further comprising a guide surface (50) to guide a stem/spear of the individual crop (12) into the cutting path of the cutter unit (52).

15. A harvesting system comprising one or more said harvesters (1) of any preceding claim and a locomotive element (10), wherein the locomotive element (10) is configured to move the one or more harvesters (1) along the ground, and optionally further comprising an object detection and avoidance system configured to guide the locomotive element (10) along a row of crops (5).

## Patentansprüche

1. Erntemaschine (1) zum Ernten einer Feldfrucht (12), umfassend ein Gerüst (24) und eine Schneideinheit (52),
wobei das Gerüst (24) betreibbar ist, um im Wesentlichen über der Feldfrucht (12) positioniert zu sein;
wobei das Gerüst (24) dazu konfiguriert ist, die Schneideinheit (52) beweglich zu stützen,
**dadurch gekennzeichnet, dass** das Gerüst (24) eine Vielzahl von Stellgliedern (610) umfasst, um die Schneideinheit (52) entlang dreier zueinander senkrechter Achsen relativ zu dem Gerüst (24) zu bewegen, um es der Schneideinheit (52) zu ermöglichen, sich so zu bewegen, dass die Schneideinheit (52) betreibbar ist, um sich einer einzelnen Feldfrucht (12) aus einer beliebigen Richtung relativ zu der einzelnen Feldfrucht (12) zu nähern und sie abzuschneiden.

2. Erntemaschine (1) nach Anspruch 1, wobei die beliebige Richtung relativ zu der einzelnen Feldfrucht (12) eine beliebige Richtung in einer horizontalen Ebene relativ zu der einzelnen Feldfrucht (12) umfasst.

3. Erntemaschine (1) nach einem vorhergehenden Anspruch, wobei die Schneideinheit (52) in einem schrägen Winkel relativ zu dem Boden positioniert ist und/oder wobei die Schneideinheit (52) in einer oder mehreren Achsen relativ zu dem Gerüst (24) und/oder der Feldfrucht (12) drehbar ist.

4. Erntemaschine (1) nach einem vorhergehenden Anspruch, wobei die Schneideinheit (52) ein Schneidelement (32) umfasst, wobei das Schneidelement (32) optional eines oder eine Kombination von Folgendem umfasst: eine Klinge; einen Draht; eine Schere; einen scherenartigen Schneidmechanismus.

5. Erntemaschine (1) nach einem vorhergehenden Anspruch, ferner einen Greifer (28) umfassend, der dazu konfiguriert ist, die Feldfrucht (12) zu greifen.

6. Erntemaschine (1) nach Anspruch 5, wobei die Schneideinheit (52) und der Greifer (28) an einem Erntewerkzeug (22) montiert sind, das mit dem Gerüst (24) verbunden ist, und wobei das Erntewerkzeug (22) optional ein Stellglied (610) zum Bewegen der Schneideinheit (52) in einer vertikalen Richtung relativ zu dem Boden umfasst.

7. Erntemaschine (1) nach Anspruch 6, wobei die Schneideinheit (52) in einem schrägen Winkel zu dem Erntewerkzeug (22) positioniert ist.

8. Erntemaschine (1) nach einem vorhergehenden Anspruch, wobei die Erntemaschine (1) ferner einen Bodensensor (34) umfasst, der dazu konfiguriert ist, den Abstand zwischen der Schneideinheit (52) und dem Boden zu erfassen, und wobei die Erntemaschine (1) optional dazu konfiguriert ist, die Bewegung der Schneideinheit (52) basierend auf dem erfassten Abstand zwischen der Schneideinheit (52) und dem Boden zu steuern.

9. Erntemaschine (1) nach einem vorhergehenden Anspruch, wobei die Erntemaschine (1) ferner einen Bodensensor (34) umfasst, der dazu konfiguriert ist, einen Kontakt zwischen der Schneideinheit (52) und dem Boden zu erfassen.

10. Erntemaschine (1) nach einem vorhergehenden Anspruch, wobei die Schneideinheit (52) ein Gehäuse umfasst und wobei die Schneideinheit (52) optional ferner ein Schneidestellglied (36) umfasst, das dazu konfiguriert ist, die Schneideinheit (52) zwischen einer ersten und einer zweiten Position zu verstellen, wobei in der ersten Position ein Schneidelement (32) in das Gehäuse zurückgezogen ist und in der zweiten Position das Schneidelement (32) freiliegt.

11. Erntemaschine (1) nach einem vorhergehenden Anspruch, wobei die Erntemaschine (1) ferner eine Erfassungseinrichtung (40) umfasst, die dazu konfiguriert ist, die relative Position einzelner Feldfrüchte (12) zu erfassen, und wobei die Erfassungseinrichtung (40) optional einen oder mehrere Bildsensoren umfasst und wobei die Erfassungseinrichtung (40) vorzugsweise an dem Gerüst (24) bereitgestellt ist.

12. Erntemaschine (1) nach Anspruch 11, wobei die Erntemaschine (1) basierend auf der erfassten relativen Position einzelner Feldfrüchte (12) dazu konfiguriert ist, die Stellglieder (610) so zu steuern, dass die Schneideinheit (52) die einzelnen Feldfrüchte (12) aus einer Richtung abschneidet, die andere einzelne Feldfrüchte nicht beschädigt.

13. Erntemaschine (1) nach einem vorhergehenden Anspruch, wobei die Erntemaschine (1) während des Schneidens dazu konfiguriert ist, die Schneideinheit (52) in Bezug auf die Vorwärtsbewegung der Erntemaschine (1) nach hinten zu bewegen, um die Vorwärtsbewegung der Erntemaschine (1) zu kompensieren.

14. Erntemaschine (1) nach einem vorhergehenden Anspruch, ferner eine Führungsfläche (50) umfassend, um einen Stängel/Stiel der einzelnen Feldfrucht (12) in den Schneidweg der Schneideinheit (52) zu führen.

15. Erntesystem, umfassend eine oder mehrere Erntemaschinen (1) nach einem vorhergehenden Anspruch und ein selbstfahrendes Bauteil (10), wobei das selbstfahrende Bauteil (10) dazu konfiguriert ist, die eine oder mehreren Erntemaschinen (1) entlang des Bodens zu bewegen, und optional ferner ein Objekterkennungs- und -vermeidungssystem umfassend, das dazu konfiguriert ist, das selbstfahrende Bauteil (10) entlang einer Feldfruchtreihe (5) zu führen.

## Revendications

1. Moissonneuse (1) pour moissonner une récolte (12), comprenant un portique (24) et une unité de coupe (52),
le portique (24) pouvant être positionné sensiblement au-dessus de la récolte (12) ;
le portique (24) étant configuré pour supporter de manière mobile l'unité de coupe (52),
**caractérisée en ce que** le portique (24) comprend une pluralité d'actionneurs (610) pour déplacer l'unité de coupe (52) le long de trois axes mutuellement perpendiculaires par rapport au portique (24) pour permettre à l'unité de coupe (52) de se déplacer de telle sorte que l'unité de coupe (52) puisse fonctionner pour s'approcher et couper une récolte individuelle (12) depuis n'importe quelle direction par rapport à la récolte individuelle (12).

2. Moissonneuse (1) selon la revendication 1, dans laquelle ladite direction quelconque par rapport à la récolte individuelle (12) comprend n'importe quelle direction dans un plan horizontal par rapport à la récolte individuelle (12).

3. Moissonneuse (1) selon l'une quelconque des revendications précédentes, dans laquelle l'unité de coupe (52) est positionnée selon un angle oblique par rapport au sol et/ou dans laquelle l'unité de coupe (52) peut tourner sur un ou plusieurs axes par rapport au portique (24) et/ou la récolte (12).

4. Moissonneuse (1) selon l'une quelconque des revendications précédentes, dans laquelle l'unité de coupe (52) comprend un élément de coupe (32) ; facultativement, dans laquelle l'élément de coupe (32) comprend l'un quelconque ou une quelconque combinaison de : une lame ; un fil ; des cisailles ; un mécanisme de coupe de type cisailles.

5. Moissonneuse (1) selon l'une quelconque des revendications précédentes, comprenant en outre un préhenseur (28) configuré pour saisir la récolte (12).

6. Moissonneuse (1) selon la revendication 5, dans laquelle l'unité de coupe (52) et le préhenseur (28) sont montés sur un outil de moissonnage (22) connecté au portique (24), et facultativement dans laquelle l'outil de moissonnage (22) comprend un actionneur (610) pour déplacer l'unité de coupe (52) dans une direction verticale par rapport au sol.

7. Moissonneuse (1) selon la revendication 6, dans laquelle l'unité de coupe (52) est positionnée selon un angle oblique par rapport à l'outil de moissonnage (22).

8. Moissonneuse (1) selon l'une quelconque des revendications précédentes, dans laquelle la moissonneuse (1) comprend en outre un capteur de sol (34) configuré pour détecter la distance entre l'unité de coupe (52) et le sol, et facultativement dans laquelle la moissonneuse (1) est configurée pour commander le mouvement de l'unité de coupe (52) sur la base de la distance détectée entre l'unité de coupe (52) et le sol.

9. Moissonneuse (1) selon l'une quelconque des revendications précédentes, dans laquelle la moissonneuse (1) comprend en outre un capteur de sol (34) configuré pour détecter un contact entre l'unité de coupe (52) et le sol.

10. Moissonneuse (1) selon l'une quelconque des revendications précédentes, dans laquelle l'unité de coupe (52) comprend un carter, et facultativement dans laquelle l'unité de coupe (52) comprend en outre un actionneur de coupe (36) qui est configuré pour actionner l'unité de coupe (52) entre une première et une seconde positions, dans laquelle, dans la première position, un élément de coupe (32) est rétracté dans le carter et dans la seconde position, l'élément de coupe (32) est exposé.

11. Moissonneuse (1) selon l'une quelconque des revendications précédentes, dans laquelle la moissonneuse (1) comprend en outre un moyen de détection (40) qui est configuré pour détecter la position relative de récoltes individuelles (12), et facultativement dans laquelle le moyen de détection (40) comprend un ou plusieurs capteurs d'images, et de préférence dans laquelle le moyen de détection (40) est prévu sur le portique (24).

12. Moissonneuse (1) selon la revendication 11, dans laquelle, sur la base de la position relative détectée des récoltes individuelles (12), la moissonneuse (1) est configurée pour commander les actionneurs (610) de sorte que l'unité de coupe (52) coupe la récolte individuelle (12) depuis une direction qui ne nuit pas aux autres récoltes individuelles.

13. Moissonneuse (1) selon l'une quelconque des revendications précédentes, dans laquelle, pendant la coupe, la moissonneuse (1) est configurée pour déplacer l'unité de coupe (52) vers l'arrière par rapport au mouvement vers l'avant de la moissonneuse (1) pour compenser le mouvement vers l'avant de la moissonneuse (1).

14. Moissonneuse (1) selon l'une quelconque des revendications précédentes, comprenant en outre une surface de guidage (50) pour guider une tige/pointe de la récolte individuelle (12) dans le chemin de coupe de l'unité de coupe (52).

15. Système de moissonnage comprenant une ou plusieurs desdites moissonneuses (1) selon l'une quelconque des revendications précédentes et un élément de traction (10), dans lequel l'élément de traction (10) est configuré pour déplacer l'une ou plusieurs moissonneuses (1) le long du sol, et facultativement comprenant en outre un système de détection et d'évitement d'objet configuré pour guider l'élément de traction (10) le long d'une rangée de récoltes (5).
